# EUROPÄISCHE PATENTANMELDUNG

(11) **EP 2 644 787 A1**
(43) Veröffentlichungstag der Anmeldung: **02.10.2013**
(21) Anmeldenummer: 13152844.0
(22) Anmeldetag: 28.01.2013
(51) Int. Cl.: E03B 7/07

(54) **Leitungssystem sowie Verfahren zur Überwachung eines Fluidleitungsnetzes**

(30) Priorität: 16.03.2012 DE 102012102226
(71) Anmelder: Stamos GmbH, 41472 Neuss (DE)
(72) Erfinder: Stamos, Alexander, 41472 Neuss (DE); Van Bergen, Heiko, 41468 Neuss (DE)
(74) Vertreter: Albrecht, Ralf

(57) **Zusammenfassung**

Die vorliegende Erfindung betrifft eine Leitungssystem mit wenigstens einem Überwachungsabschnitt, der einen Leitungsabschnitt (1), in dem ein Ventil (2) angeordnet ist, eine Bypassleitung (3), welche einen geringeren Durchmesser als der Leitungsabschnitt (1) aufweist und an den Leitungsabschnitt (1) angeschlossen ist, so dass sie das Ventil (2) überbrückt, wobei in der Bypassleitung (3) ein Bypassventil (4) angeordnet ist und der Bypassleitung (3) eine Messvorrichtung (5) zugeordnet ist, und eine Steuervorrichtung (6), um mittels der Messvorrichtung (5) erfasste Fluidstromwerte auszulesen und das Ventil (2) und das Bypassventil (4) zu steuern, umfasst. Die Steuervorrichtung (6) ist derart ausgebildet, dass sie zwischen einem Überwachungsmodus und einem Betriebsmodus umgeschaltet werden kann, wobei in dem Überwachungsmodus das Ventil (2) in dem Leitungsabschnitt (1) geschlossen und das Bypassventil (4) geöffnet wird, so dass lediglich die Bypassleitung (3) durchströmt wird, und der Fluidstrom in der Bypassleitung (3) mittels der Messvorrichtung (5) überwacht wird, wobei auch das Bypassventil (4) von der Steuervorrichtung (6) in dem Überwachungsmodus verschlossen wird, wenn von der Messvorrichtung (5) ein unzulässiger Fluidstrom in der Bypassleitung (3) erfasst wird, und wobei in dem Betriebsmodus das Ventil (2) in dem Leitungsabschnitt (1) geöffnet und das Bypassventil (4) geschlossen wird, so dass lediglich der Leitungsabschnitt (1) durchströmt wird.

## Beschreibung

Die Erfindung betrifft ein Leitungssystem mit wenigstens einem Überwachungsabschnitt, der einen Leitungsabschnitt, ein in dem Leitungsabschnitt angeordnetes Ventil, eine Bypassleitung, welche an den Leitungsabschnitt beidseitig angeschlossen ist, so dass das Ventil des Leitungsabschnittes überbrückt wird, wobei die Bypassleitung einen geringeren Durchmesser als der Leitungsabschnitt aufweist, ein in der Bypassleitung angeordnetes Bypassventil, eine der Bypassleitung zugeordnete Messvorrichtung zur Bestimmung des Fluidstromes in der Bypassleitung, und eine Steuervorrichtung, die mit dem Ventil, dem Bypassventil und der Messvorrichtung verbunden und ausgebildet ist, um mittels der Messvorrichtung erfasste Fluidstromwerte auszulesen und das Ventil und das Bypassventil zu steuern, umfasst.

Des Weiteren betrifft die Erfindung ein Verfahren zur Überwachung eines Leitungssystems auf Leckagen.

Fluidführende Leitungssysteme kommen sowohl im gewerblichen als auch im privaten Bereich vor und dienen des Transportes von Fluiden, insbesondere Wasser zu einem Verbraucher. In einem Einfamilienhaus beispielsweise werden über ein Netz von Wasserleitungen, die sich durch das gesamte Haus erstrecken, verschiedene sanitäre Einrichtungen sowie Geräte mit Wasser versorgt. Gespeist wird das Leitungssystem über eine äußere Leitung des lokalen Wasserversorgers, von der Wasser in die zentrale Hauptzuleitung des hauseigenen Leitungssystemes geführt wird. Von der Hauptzuleitung gelangt das Wasser über zahlreiche von dieser abzweigende Zweigleitungen an die Badezimmer, Küchen und weitere Verbrauchsorte des Hauses.

Im gewerblichen Bereich, beispielsweise in Fabriken oder Schulen, erfolgt dies auf analoge Weise durch das jeweilige hauseigene Leitungssystem, wobei der Wasserverbrauch im Allgemeinen wesentlich höher ist, als im privaten Bereich.

Im Laufe der Zeit können an den Leitungen derartiger Leitungssysteme in Folge von Korrosion oder auch mechanischer Beschädigung Leckstellen - auch Rohrbrüche genannt - auftreten, an denen dann Fluid austritt. Beschädigungen an den Decken, Wänden und Böden des Gebäudes sowie an in dem Gebäude befindlichen Möbel und Elektrogeräten können die Folge sein, womit hohe Kosten verursacht sind. Da die Wasserleitungen im Allgemeinen unter Putz, also innerhalb der Wände, Decken bzw. Böden geführt werden, kann eine Leckstelle in einer Leitung mitunter erst erkannt werden, wenn das aus dieser austretende Wasser sich beispielsweise durch die gesamte Wand bis zu deren Oberfläche ausgebreitet hat. Ist dies der Fall, liegt bereits ein erheblicher Schaden an dem Gebäude vor, weshalb die Bestrebungen dahin gehen, Vorrichtungen bzw. Verfahren vorzugeben, mit denen Leckstellen in fluidführenden Leitungssystemen erkannt werden können.

Die DE 39 07 209 C1 beispielsweise offenbart eine Vorrichtung zur Überwachung eines fluidführenden Leitungssystems auf Leckstellen, insbesondere Kleinlecks. Die Vorrichtung umfasst einen Leitungsabschnitt sowie ein in diesem angeordnetes Ventil, welches über eine Bypassleitung überbrückt wird. In der Bypassleitung befinden sich ein Bypassventil sowie eine Messvorrichtung zur Bestimmung des Fluidstromes in der Bypassleitung. Des Weiteren ist eine Steuervorrichtung vorgesehen, welche mit der Messvorrichtung, dem Ventil in dem Leitungsabschnitt und dem Bypassventil verbunden ist. Wird über die Messvorrichtung in der Bypassleitung ein geringer Volumenstrom und somit ein Kleinleck detektiert, so wird das Bypassventil verschlossen, um Schäden zu verhindern.

Wird ein Fluidstrom in der Bypassleitung oberhalb eines vorgegebenen Wertes erfasst, beispielsweise weil von einem Bewohner des Hauses eine Waschmaschine aktiviert wird, so wird das Ventil in dem Leitungsabschnitt geöffnet, um diese benutzerbedingte Wasserentnahme zu ermöglichen.

Mit dieser Vorrichtung soll demzufolge eine Überwachung auf Leckstellen während des normalen Betriebes erfolgen.

An dieser Vorrichtung wird jedoch als nachteilig empfunden, dass sie keinen hinreichenden Schutz vor Wasserschäden bietet, da insbesondere zwischen einem Großleck und einer benutzerbedingten Wasserentnahme nicht unterschieden wird. Da auf eine größere Wasserentnahme mit dem Öffnen des Ventils in dem Leitungsabschnitt reagiert wird, können trotz Vorhandensein einer derartigen Vorrichtung erhebliche Wasserschäden in einem Gebäude entstehen. Dies ist mit hohen Kosten verbunden.

Ausgehend von diesem Stand der Technik ist es eine Aufgabe der vorliegenden Erfindung, ein Verfahren sowie eine Vorrichtung vorzugeben, durch welche ein zuverlässiger Schutz vor Leckage bedingten Wasserschäden gegeben ist.

Diese Aufgabe wird bei einem Leitungssystem der eingangs genannten Art dadurch gelöst, dass die Steuervorrichtung derart ausgebildet ist, dass sie zwischen einem Überwachungsmodus und einem Betriebsmodus umgeschaltet werden kann, wobei in dem Überwachungsmodus das Ventil in dem Leitungsabschnitt geschlossen und das Bypassventil geöffnet wird, so dass lediglich die Bypassleitung durchströmt wird, und der Fluidstrom in der Bypassleitung mittels der Messvorrichtung überwacht wird, wobei auch das Bypassventil von der Steuervorrichtung in dem Überwachungsmodus verschlossen wird, wenn von der Messvorrichtung ein unzulässiger Fluidstrom in der Bypassleitung erfasst wird, und wobei in dem Betriebsmodus das Ventil in dem Leitungsabschnitt geöffnet und das Bypassventil geschlossen wird, so dass lediglich der Leitungsabschnitt durchströmt wird.

Bei einem Verfahren der eingangs genannten Art wird diese Aufgabe dadurch gelöst, dass zwischen einem Überwachungsmodus und einem Betriebsmodus gewählt wird, wobei in dem Überwachungsmodus das Ventil in dem Leitungsabschnitt geschlossen und das Bypassventil geöffnet wird, so dass lediglich die Bypassleitung durchströmt wird, und der Fluidstrom in der Bypassleitung mittels der Messvorrichtung überwacht wird, wobei auch das Bypassventil von der Steuervorrichtung in dem Überwachungsmodus verschlossen wird, wenn von der Messvorrichtung ein unzulässiger Fluidstrom in der Bypassleitung erfasst wird, und wobei in dem Betriebsmodus das Ventil in dem Leitungsabschnitt geöffnet und das Bypassventil geschlossen wird, so dass lediglich der Leitungsabschnitt durchströmt wird.

Der Erfindung liegt mit anderen Worten die Idee zugrunde, zur Überwachung des Leitungssystems auf Leckstellen zwischen einem Überwachungsmodus und einem Betriebsmodus zu unterscheiden. Der Überwachungsmodus wird dabei insbesondere gewählt, wenn mit einer normalen, benutzerbedingten Wasserentnahme nicht zu rechnen ist. Dies kann beispielsweise der Fall sein, wenn die Bewohner eines Einfamilienhauses im Urlaub oder bei der Arbeit sind oder aber während der Ferien in einem Schulgebäude eine Wasserentnahme nicht zu erwarten ist.

In dem Überwachungsmodus ist das Ventil in dem Leitungsabschnitt verschlossen und Bypassleitung, welches das Ventil in dem Leitungsabschnitt überbrückt, geöffnet. Ein Fluid-, insbesondere Wasserstrom ist lediglich durch die Bypassleitung möglich. Diese weist einen geringeren Durchmesser als der Leitungsabschnitt auf, wodurch der Fluidstrom mittels der in der Bypassleitung angeordneten Netzvorrichtung besonders zuverlässig erfasst werden kann.

Wird in dem Überwachungsmodus von der Messvorrichtung in der Bypassleitung ein unzulässiger Fluidstrom erfasst, so wird auch das Bypassventil verschlossen. Ein unzulässiger Fluidstrom kann beispielsweise vorliegen, wenn ohne Unterbrechung ein Fluidstrom durch die Bypassleitung strömt und ein vorgegebenes Fluidvolumen von beispielsweise 1000 l erreicht. Dieses vorgegebene Fluidvolumen entspricht einem Wert, der unter normalen Umständen nicht erreicht wird, so dass auf eine Leckage geschlossen werden kann. Ebenso ist es möglich, auf einen unzulässigen Fluidstrom zu erkennen, wenn über eine vorgegebene Zeitdauer, beispielsweise 30 Minuten am Stück, durchgehend ein Fluidstrom in der Bypassleitung erfasst wird. Sollte über die Zeitdauer kontinuierlich Fluid strömen, wird eine Leckage gemeldet. Hierbei kann es sich beispielsweise auch um einen durchlaufenden Spülkasten einer Toilette handeln. Schließlich kann auch der Fluidstrom im Zusammenhang mit der Zeit als Indikator für einen unzulässigen Fluidstrom dienen. Wird ein Volumenstrom oberhalb einer vorgegebenen Grenze, zum Beispiel 1000 l/h. erfasst, wird ein unzulässiger Fluidstrom gemeldet. Hier dient der Volumenstrom als Indikator dafür, dass ein großer Rohrbruch vorliegt, da ein hoher Wasserdurchfluss in kurzer Zeit erfolgt. In allen Fällen können das Fluidvolumen, die Zeitdauer oder auch der Volumenstrom fest vorgegeben sein oder auch eingestellt werden, um die Sensitivität des Messsystems vorgeben zu können.

Wenn ein unzulässiger Fluidstrom erfasst wird, wird ein weiterer Fluidstrom unterbunden, um leckbedigten Wasserschäden vorzubeugen. Somit ist erfindungsgemäß ein hohes Maß an Sicherheit gegeben, da Lecks - unabhängig von ihrer Größe - zuverlässig erfasst werden und mit einer Unterbrechung des Fluidstrom auf das Vorliegen eines Lecks reagiert wird. Im Ergebnis kann durch Leckstellen, welche sich hinter dem Leitungsabschnitt in dem Leitungssystem befinden, kein Wasser mehr austreten und Wasserschäden werden auf diesem Wege sicher verhindert.

In dem Betriebsmodus hingegen ist das Bypassventil verschlossen und das Ventil in dem Leitungsabschnitt geöffnet, so dass ein Fluidstrom nur durch den Leitungsabschnitt größeren Querschnitts erfolgt. Somit ist ein reibungsfreier Normalbetrieb gewährleistet. Sind die Bewohner eines Einfamilienhauses beispielsweise zu Hause, oder erfolgt- außerhalb der Ferien - der Normalbetrieb in einer Schule, ist mit zahlreichen benutzerbedingten Wasserentnahmen zu rechnen. Diese sollen ungestört erfolgen können, was gemäß der vorliegenden Erfindung im Betriebsmodus uneingeschränkt möglich ist.

Gemäß einem Ausführungsbeispiel der vorliegenden Erfindung ist vorgesehen, dass der Leitungsabschnitt einen Abschnitt einer Hauptzuleitung des Leitungssystems bildet und das Ventil in dem Leitungsabschnitt das Hauptventil des Leitungssystems ist. Da nur Leckstellen detektiert werden können, die sich in Strömungsrichtung hinter dem Überwachungsabschnitt befinden, sollte der Überwachungsabschnitt und somit die Messvorrichtung möglichst nah an der Fluidquelle, also insbesondere in der Hauptzuleitung vorgesehen sein. Zweckmäßigerweise ist dann das Ventil in dem Leitungsabschnitt des Hauptventils des Leitungssystems, wodurch ein besonders sicherer Schutz vor Wasserschäden durch Leckstellen gewährleistet wird.

Eine weitere Ausführungsform der vorliegenden Erfindung zeichnet sich dadurch aus, dass an dem Leitungsabschnitt endseitig Verbindungsmittel, insbesondere Flansche zum Anschließen des Leitungsabschnitts an bestehende Leitungen vorgesehen sind. Diese modularartige Ausbildung des erfindungsgemäßen Leitungssystems ermöglicht es, den Leitungsabschnitt in eine bestehende Leitung einzusetzen. Somit kann mit geringem Aufwand eine erfindungsgemäße Überwachung auf Leckstellen auch in einem vorhandenen Leitungsnetz, beispielsweise dem Wasserleitungsnetz eines Einfamilienhauses erfolgen. Dazu wird der Leitungsabschnitt über die endseitig an diesem vorgesehenen Verbindungsmittel, insbesondere Flansche mit einer bestehenden Leitung, in welcher zu diesem Zweck eine Öffnung eingebracht wurde, verbunden.

In weiterer Ausgestaltung der Erfindung ist vorgesehen, dass die Steuervorrichtung mit einem weiteren, vor dem Leitungsabschnitt angeordneten Ventil des Leitungssystems verbunden ist, und die Steuervorrichtung derart ausgebildet ist, dass auch das weitere Ventil von der Steuervorrichtung in dem Überwachungsmodus verschlossen wird, wenn von der Messvorrichtung ein Fluidstrom in der Bypassleitung oberhalb eines vorgegebenen Wertes erfasst wird. Diese Ausgestaltungsform ermöglicht ein besonders hohes Maß an Sicherheit. Wird zusammen mit dem Bypassventil ein weiteres, vor dem Leitungsabschnitt angeordnetes Ventil verschlossen, so ist der Fluidstrom an zwei Stellen innerhalb des Leitungssystems unterbrochen. Insbesondere, wenn das Ventil in dem Leitungsabschnitt nicht das Hauptventil des Leitungssystems ist, hat sich diese Ausgestaltung als zweckmäßig erwiesen. Das weitere, vor dem Leitungsabschnitt angeordnete Ventil kann dann insbesondere das Hauptventil des Leitungssystems sein.

In einem weiteren Ausführungsbeispiel der vorliegenden Erfindung ist vorgesehen, dass an der Steuervorrichtung ein Schalter vorgesehen ist, über den ein Benutzer manuell zwischen dem Überwachungsmodus und dem Betriebsmodus umschalten kann. Über den Schalter kann der Benutzer flexibel zwischen dem Überwachungs- und dem Betriebsmodus hin und her schalten. Wird beispielsweise das Wasserleitungssystem eines Einfamilienhauses gemäß der vorliegenden Erfindung auf Leckstellen überwacht, so kann ein Bewohner des Hauses in den Überwachungsmodus schalten, wenn der das Haus verlässt.

Wird ein Schulgebäude überwacht, so kann einer der Mitarbeiter den Überwachungsmodus beispielsweise jeden Tag nach Schulschluss und insbesondere zu Beginn der Schulferien aktivieren. Über den Zeitraum, in welchem nicht mit einer benutzerbedingten Wasserentnahme zu rechnen ist, kann im Ergebnis sicher eine erfindungsgemäße Überwachung des Leitungssystems auf Leckstellen erfolgen.

Darüber hinaus kann vorgesehen sein, dass an der Steuervorrichtung ein Pause-Schalter vorgesehen ist, über den ein Benutzer aus dem Überwachungsmodus in den Betriebsmodus umschalten kann, wobei nach einer vorgegebenen Zeitspanne nach Betätigung des Pause-Schalters die Steuervorrichtung automatisch in den Überwachungsmodus zurückschaltet. Diese Ausgestaltungform ermöglicht einem Benutzer, den Überwachungsmodus auf komfortable Weise für einen vorgegebenen Zeitraum zu unterbrechen. Wird ein Schulgebäude beispielsweise während der Ferien für eine Veranstaltung vorübergehend genutzt, so kann dem durch Betätigung des Pause-Schalters Rechnung getragen werden, da vorrübergehend benutzerbedingte Wasserentnahmen möglich sind.

In vorteilhafter Ausgestaltung der Erfindung ist die Steuervorrichtung derart ausgebildet, dass von dieser nach Art einer Zeitschaltuhr zu vorgegebenen Zeitpunkten automatisch zwischen dem Betriebsmodus und dem Überwachungsmodus umgeschaltet werden kann. So können beliebige Zeitpunkte und Zeitspannen programmiert werden, in denen ein Wechsel von dem einen in den anderen Modus erfolgt. Verlassen beispielsweise jeden Tag zu einem vorgegebenen Zeitpunkt alle Bewohner das Haus und kehren nach Ablauf einer bestimmten Zeitspanne zurück, so kann die Steuervorrichtung gemäß diesem sich wiederholenden Ablauf programmiert werden, wobei in dem Zeitraum, in dem kein Bewohner zu Hause ist, täglich der Überwachungsmodus läuft. Im Ergebnis wird besonders benutzerfreundlich und effizient zwischen dem Überwachungsmodus und dem Betriebsmodus unterschieden.

In weiterer Ausgestaltung der vorliegenden Erfindung kann vorgesehen sein, dass die Steuervorrichtung derart ausgebildet ist, dass von ihr ein insbesondere akustisches Signal ausgegeben wird, wenn im Überwachungsmodus von der Messvorrichtung ein unzulässiger Fluidstrom in der Bypassleitung erfasst wird. So werden Benutzer, beispielsweise die Bewohner eines Einfamilienhauses informiert, wenn in dem Überwachungsmodus eine Leckstelle detektiert wird und diese können die notwendigen Maßnahmen ergreifen, um die Leckstelle zu reparieren.

Eine weitere Ausführungsform zeichnet sich dadurch aus, dass die Steuervorrichtung derart ausgebildet ist, dass ein Benutzer per SMS und/oder via Internet von der Steuervorrichtung informiert wird, wenn im Überwachungsmodus von der Messvorrichtung ein unzulässiger Fluidstrom in der Bypassleitung detektiert wird. Diese Ausgestaltungsform ist besonders zweckmäßig, da ein Benutzer, auch wenn der beispielsweise nicht zu Hause ist, über das Vorliegen einer Leckstelle informiert wird. Er kann so besonders zeitnah Reparaturmaßnahmen einleiten.

In weiterer Ausgestaltung der Erfindung kann vorgesehen sein, dass das Ventil in dem Leitungsabschnitt und das Bypassventil derart ausgebildet sind, dass deren Ventilstellung auslesbar ist, und die Steuervorrichtung derart ausgebildet ist, dass sie die Ventilstellung des Ventils in dem Leitungsabschnitt und die Ventilstellung des Bypassventils kontinuierlich überwacht. Durch die Überwachung der Ventilstellungen können technische Fehler ausgeschlossen werden und die erfindungsgemäße Überwachung auf Leckstellen erfolgt besonders zuverlässig.

Das Ventil und/oder das Bypassventil können insbesondere als als Motorkugelventil mit Endschalter ausgebildet ist sein, was sich als besonders zweckmäßig erwiesen hat.

Die Messvorrichtung umfasst in vorteilhafter Ausgestaltung einen Hallsensor, mit welchem in an sich bekannter Weise zuverlässig der Fluidstrom in der Bypassleitung erfasst werden kann.

In vorteilhafter Ausgestaltung der Erfindung sind mehrere Messvorrichtungen in dem Leitungssystem vorgesehen und mit der Steuervorrichtung verbunden. So wird gewährleistet, dass an verschiedenen Stellen in dem Leitungssystem der Fluidstrom in den Leitungen überwacht wird und es können besonders zuverlässig Leckstellen in dem Leitungssystem detektiert werden.

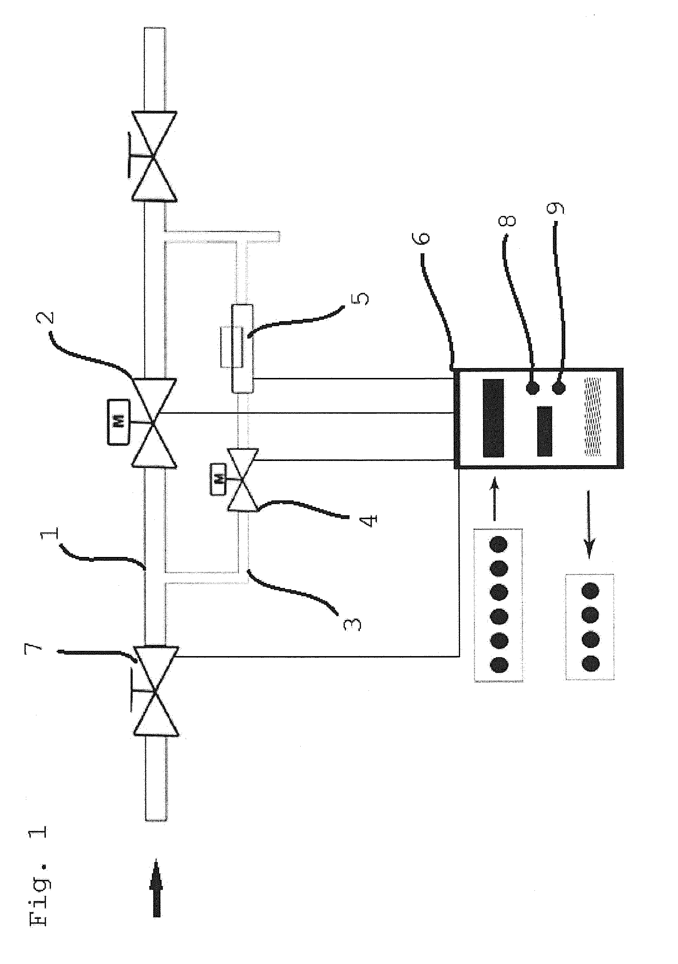

Zweckmäßigerweise sind insbesondere mehrere Überwachungsabschnitte in dem Leitungssystem vorgehen, wodurch eine besonders zuverlässige Überwachung des Leitungssystems auf Leckstellen erfolgt. Darüber hinaus kann bei Vorhandensein mehrerer Überwachungsstrecken an unterschiedlichen Stellen in dem Leitungssystem das jeweilige Bypassventil verschlossen und somit unterschiedliche Zweigleitungen voneinander unabhängig verschlossen werden. Der Betrieb in den Zweigleitungen, die nicht von der Leckstelle betroffen sind, kann reibungsfrei weiter geführt werden. Hinsichtlich weiterer vorteilhafter Ausgestaltungen und Weiterbildungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt die einzige Figur einen Ausschnitt eines erfindungsgemäßen Leitungssystems mit einem Überwachungsabschnitt in schematischer Darstellung.

Die einzige Figur zeigt einen Ausschnitt eines erfindungsgemäßen Leitungssystems, bei dem es sich hier um das Wasserleitungsnetz eines nicht dargestellten Schulgebäudes handelt. Die Strömungsrichtung durch das Leitungssystemverläuft von links nach rechts und ist durch einen Pfeil in der Figur angedeutet.

Der hier dargestellte Ausschnitt des Leitungssystems umfasst einen Überwachungsabschnitt mit einem Leitungsabschnitt 1 und einem in dem Leitungsabschnitt 1 angeordneten Ventil 2.

Das Ventil 2 wird durch eine Bypassleitung 3 überbrückt, die hierfür an den Leitungsabschnitt 1 beidseitig angeschlossen ist. Die Bypassleitung 3 weist einen geringeren Durchmesser als der Leitungsabschnitt 1 auf. In der Bypassleitung 3 sind ein Bypassventil 4 sowie eine Messvorrichtung 5 zur Bestimmung des Fluidstromes in der Bypassleitung 3 angeordnet. Das Ventil 2 und das Bypassventil 4 sind hier als Motorkugelventile mit Endschaltern ausgebildet. Die Messvorrichtung 5 umfasst einen Hallsensor, mit dem in an sich bekannter Weise der Fluidstrom in der Bypassleitung 3 bestimmt wird.

Das Leitungssystem umfasst ferner eine Steuervorrichtung 6, welche mit dem Ventil 2, dem Bypassventil 4 und der Messvorrichtung 5 verbunden ist. Die Steuervorrichtung 6 ist ausgebildet, um mittels der Messvorrichtung 5 erfasste Fluidstromwerte auszulesen und das Ventil 2 und das Bypassventil 4 zu steuern.

Die Steuervorrichtung 6 ist hier mit einem weiteren, vor dem Leitungsabschnitt 1 angeordneten Ventil 7 des Leitungssystems verbunden. Das weitere Ventil 7 ist hier das Hauptventil des Leitungssystems.

An der Steuervorrichtung 6 ist ein Schalter 8 vorgesehen, über den ein Benutzer manuell zwischen einem Überwachungsmodus und einem Betriebsmodus umschalten kann. In dem Überwachungsmodus ist das Ventil 2 in dem Leitungsabschnitt 1 geschlossen und das Bypassventil 4 geöffnet, so dass lediglich die Bypassleitung 3 durchströmt wird, wobei der Fluidstrom in der Bypassleitung 3 mittels der Messvorrichtung 5 überwacht wird. In dem Betriebsmodus hingegen ist das Ventil 2 in dem Leitungsabschnitt 1 geöffnet und das Bypassventil 4 geschlossen, so dass lediglich der Leitungsabschnitt 1 durchströmt wird und benutzerbedingte Wasserentnahmen ungehindert erfolgen können.

Über den Schalter 8 hinaus ist ein weiterer Schalter, hier ein Pause-Schalter 9 an der Steuervorrichtung 6 vorgesehen, über den ein Benutzer aus dem Überwachungs- in den Betriebsmodus umschalten kann, wobei nach einer vorgegebenen Zeitspanne nach Betätigung des Pause-Schalters 9 die Steuervorrichtung 6 automatisch in den Überwachungsmodus zurückschaltet.

Die Steuervorrichtung 6 ist ferner derart ausgebildet, dass von dieser nach Art einer Zeitschaltuhr zu vorgegebenen Zeitpunkten automatisch zwischen dem Betriebsmodus und dem Überwachungsmodus umgeschaltet werden kann. Dazu sind der tägliche Unterrichtsbeginn sowie das Unterrichtsende und sämtliche Schulferien in der Steuervorrichtung abgelegt.

Im Betrieb ist während der Unterrichtszeiten der Betriebsmodus gewählt, so dass sämtliche Wasserentnahmen, die beispielsweise durch Schüler, welche die Toiletten oder Duschen des Schulgebäudes verwenden, ungehindert durch das geöffnete Ventil 2 des Leitungsabschnitts 1 erfolgen können.

Nach Unterrichtsende wird von der Steuervorrichtung 6 automatisch in den Überwachungsmodus gewechselt. Dabei erfolgt der Wechsel zweckmäßiger Weise erst nach einer vorgegebenen Zeit nach dem tatsächlichen Unterrichtsende, wenn davon ausgegangen werden kann, dass alle Personen das Schulgebäude verlassen haben.

Das Ventil 2 in dem Leitungsabschnitt 1 wird dazu verschlossen und das Bypassventil 4 geöffnet, so dass lediglich die Bypassleitung 3 durchströmt und der Fluidstrom in der Bypassleitung 3 mittels der Messvorrichtung 5 überwacht wird.

Wird in dem Überwachungsmodus von der Messvorrichtung 5 ein unzulässiger Fluidstrom in der Bypassleitung 3 erfasst, so wird von der Steuervorrichtung 6 auch das Bypassventil 4 verschlossen. Ein unzulässiger Fluidstrom kann beispielsweise vorliegen, wenn ohne Unterbrechung ein Fluidstrom durch die Bypassleitung strömt und ein vorgegebenes Fluidvolumen von beispielsweise 1000 l erreicht. Dieses vorgegebene Fluidvolumen entspricht einem Wert, der unter normalen Umständen nicht erreicht wird, so dass auf eine Leckage geschlossen werden kann. Ebenso ist es möglich, auf einen unzulässigen Fluidstrom zu erkennen, wenn über eine vorgegebene Zeitdauer, beispielsweise 30 Minuten am Stück, ein Fluidstrom in der Bypassleitung erfasst wird. Sollte über die Zeitdauer kontinuierlich Fluid strömen, wird eine Leckage gemeldet. Hierbei kann es sich beispielsweise auch um einen durchlaufenden Spülkasten einer Toilette handeln. Schließlich kann auch der Fluidstrom im Zusammenhang mit der Zeit als Indikator für einen unzulässigen Fluidstrom dienen. Wird ein Volumenstrom oberhalb einer vorgegebenen Grenze, zum Beispiel 1000 l/h. erfasst, wird ein unzulässiger Fluidstrom gemeldet. Hier dient der Volumenstrom als Indikator dafür, dass ein großer Rohrbruch vorliegt, da ein hoher Wasserdurchfluss in kurzer Zeit erfolgt. In allen Fällen können das Fluidvolumen, die Zeitdauer oder auch der Volumenstrom fest vorgegeben sein oder auch eingestellt werden, um die Sensitivität des Messsystems vorgeben zu können. Da außerhalb der Unterrichtszeiten nicht mit einer benutzerbedingten Wasserentnahme zu rechnen ist, ist davon auszugehen, dass ein unzulässiger Fluidstrom durch eine Leckstelle in dem Leitungssystem verursacht wird. Durch das Verschließen des Bypassventils 4 wird Wasserschäden, welche durch die Leckstelle verursacht werden können, sicher vorgebeugt.

Um ein besonders hohes Maß an Sicherheit zu gewährleisten, wird simultan mit dem Bypassventil 4 auch das Hauptventil 7 des Wasserleitungssystems des Schulgebäudes geschlossen, welches zu diesem Zweck ebenfalls mit der Steuervorrichtung 6 verbunden ist.

Über das Verschließen des Bypassventils 4 und des Hauptventils 7 hinaus gibt die Steuervorrichtung 6 ein akustisches Signal aus, um die Erfassung einer Leckstelle in dem Leitungssystem zu signalisieren. Der Hausmeister der Schule wird per SMS und via Internet über die Erfassung der Leckstelle informiert, wodurch sichergestellt ist, dass er von der Detektion der Leckstelle unterrichtet wird. Er kann unmittelbar die notwenigen Arbeiten zur Reparatur der Leckstelle einleiten.

Wird außerhalb der Unterrichtszeiten Wasser benötigt, beispielsweise weil Reinigungsarbeiten in dem Schulgebäude durchgeführt werden, so kann dies ebenfalls in den in der Steuervorrichtung 6 hinterlegten Zeiten berücksichtigt sein. Alternativ kann ein Mitarbeiter der Schule, oder des Reinigungsdienstes über Betätigung des Schalters 8 manuell von dem Überwachungsmodus in den Betriebsmodus wechseln. Er kann auch den Pause-Schalter 9 betätigen, wobei er dann nicht manuell von dem Betriebsmodus in den Überwachungsmodus zurückwechseln muss, sondern dies automatisch nach Ablauf einer vorgegebenen Zeitspanne, beispielsweise einigen Stunden, geschieht.

Alternativ zu dem hier dargestellten Ausführungsbeispiel können auch an einer oder mehreren Zweigleitungen des Leitungssystems der Schule weitere Überwachungsabschnitte vorgesehen sein, die analog zu dem dargestellten Überwachungsabschnitt ausgebildet sind. Dann kann der Ort einer Leckstelle genauer eingegrenzt werden. Darüber hinaus kann, wenn eine Leckstelle in einer Zweigleitung erfasst wird, nur die betroffene Zweigleitung verschlossen werden, wobei das übrige Leitungssystem weiterhin zur Wasserversorgung zur Verfügung steht.

## Patentansprüche

1. Leitungssystem mit wenigstens einem Überwachungsabschnitt, der
- einen Leitungsabschnitt (1),
- ein in dem Leitungsabschnitt (1) angeordnetes Ventil (2),
- eine Bypassleitung (3), welche an den Leitungsabschnitt (1) beidseitig angeschlossen ist, so dass das Ventil (2) des Leitungsabschnittes (1) überbrückt wird, wobei die Bypassleitung (3) einen geringeren Durchmesser als der Leitungsabschnitt (1) aufweist,
- ein in der Bypassleitung (3) angeordnetes Bypassventil (4),
- eine der Bypassleitung (3) zugeordnete Messvorrichtung (5) zur Bestimmung des Fluidstromes in der Bypassleitung (3), und
- eine Steuervorrichtung (6), die mit dem Ventil (2), dem Bypassventil (4) und der Messvorrichtung (5) verbunden und ausgebildet ist, um mittels der Messvorrichtung (5) erfasste Fluidstromwerte auszulesen und das Ventil (2) und das Bypassventil (4) zu steuern, umfasst,
**dadurch gekennzeichnet, dass**
die Steuervorrichtung (6) derart ausgebildet ist, dass sie zwischen einem Überwachungsmodus und einem Betriebsmodus umgeschaltet werden kann, wobei in dem Überwachungsmodus das Ventil (2) in dem Leitungsabschnitt (1) geschlossen und das Bypassventil (4) geöffnet wird, so dass lediglich die Bypassleitung (3) durchströmt wird, und der Fluidstrom in der Bypassleitung (3) mittels der Messvorrichtung (5) überwacht wird, wobei auch das Bypassventil (4) von der Steuervorrichtung (6) in dem Überwachungsmodus verschlossen wird, wenn von der Messvorrichtung (5) ein unzulässiger Fluidstrom in der Bypassleitung (3) erfasst wird, und wobei in dem Betriebsmodus das Ventil (2) in dem Leitungsabschnitt (1) geöffnet und das Bypassventil (4) geschlossen wird, so dass lediglich der Leitungsabschnitt (1) durchströmt wird.

2. Leitungssystem nach Anspruch 1, **dadurch gekennzeichnet, dass** ein unzulässiger Fluidstrom erfasst wird, wenn ohne Unterbrechung ein vorgegebenes Fluidvolumen durch die Bypassleitung (3) strömt und/oder über eine vorgegebene Zeitdauer kontinuierlich ein Fluidstrom in der Bypassleitung (3) erfasst wird und/oder eine vorgegebene Flüssigkeitsmenge pro Zeiteinheit überschritten wird.

3. Leitungssystem nach Anspruch 1 oder 2, **dadurch gekennzeichnet, dass** der Leitungsabschnitt (1) einen Abschnitt einer Hauptzuleitung des Leitungssystems bildet und das Ventil (2) in dem Leitungsabschnitt (1) das Hauptventil des Leitungssystems ist und/oder dass an dem Leitungsabschnitt (1) endseitig Verbindungsmittel, insbesondere Flansche zum Anschließen des Leitungsabschnitts (1) an bestehende Leitungen vorgesehen sind.

4. Leitungssystem nach einem der vorhergehenden Ansprüche, **dadurch gekennzeichnet, dass** die Steuervorrichtung (6) mit einem weiteren, vor dem Leitungsabschnitt (1) angeordneten Ventil (7) des Leitungssystems verbunden ist, und die Steuervorrichtung (6) derart ausgebildet ist, dass auch das weitere Ventil (7) von der Steuervorrichtung (6) in dem Überwachungsmodus verschlossen wird, wenn von der Messvorrichtung (5) ein unzulässiger Fluidstrom in der Bypassleitung (3) erfasst wird und/oder dass an der Steuervorrichtung (6) ein Schalter (8)vorgesehen ist, über den ein Benutzer manuell zwischen dem Überwachungsmodus und dem Betriebsmodus umschalten kann.

5. Leitungssystem nach einem der vorhergehenden Ansprüche, **dadurch gekennzeichnet, dass** an der Steuervorrichtung (6) ein Pause-Schalter (9) vorgesehen ist, über den ein Benutzer aus dem Überwachungsmodus in den Betriebsmodus umschalten kann, wobei nach einer vorgegebenen Zeitspanne nach Betätigung des Pause-Schalters (9) die Steuervorrichtung (6) automatisch in den Überwachungsmodus zurückschaltet und/oder dass die Steuervorrichtung (6) derart ausgebildet ist, dass von dieser nach Art einer Zeitschaltuhr zu vorgegebenen Zeitpunkten automatisch zwischen dem Betriebsmodus und dem Überwachungsmodus umgeschaltet werden kann.

6. Leitungssystem nach einem der vorhergehenden Ansprüche, **dadurch gekennzeichnet, dass** die Steuervorrichtung (6) derart ausgebildet ist, dass von ihr ein insbesondere akustisches Signal ausgegeben wird, wenn im Überwachungsmodus von der Messvorrichtung (5) ein unzulässiger Fluidstrom in der Bypassleitung (3) erfasst wird und/oder dass die Steuervorrichtung (6) derart ausgebildet ist, dass ein Benutzer per SMS und/oder via Internet von der Steuervorrichtung (6) informiert wird, wenn im Überwachungsmodus von der Messvorrichtung (5) ein unzulässiger Fluidstrom in der Bypassleitung (3) detektiert wird.

7. Leitungssystem nach einem der vorhergehenden Ansprüche, **dadurch gekennzeichnet, dass** das Ventil (2) in dem Leitungsabschnitt (1) und das Bypassventil (4) derart ausgebildet sind, dass deren Ventilstellung auslesbar ist, und die Steuervorrichtung (6) derart ausgebildet ist, dass sie die Ventilstellung des Ventils (2) in dem Leitungsabschnitt (1) und die Ventilstellung des Bypassventils (4) kontinuierlich überwacht.

8. Leitungssystem nach einem der vorhergehenden Ansprüche, **dadurch gekennzeichnet, dass** das Ventil (2) und/oder das Bypassventil (4) als Motorkugelventil mit Endschalter ausgebildet ist und/oder dass die Messvorrichtung (5) einen Hallsensor umfasst.

9. Leitungssystem nach einem der vorhergehenden Ansprüche, **dadurch gekennzeichnet, dass** mehrere Messvorrichtungen in dem Leitungssystem vorgesehen und mit der Steuervorrichtung (6) verbunden sind und/oder dass mehrere Überwachungsabschnitte in dem Leitungssystem vorgesehen sind.

10. Verfahren zur Überwachung eines Leitungssystems auf Leckagen mit wenigstens einem Überwachungsabschnitt, der
- einen Leitungsabschnitt (1),
- ein in dem Leitungsabschnitt (1) angeordnetes Ventil (2),
- eine Bypassleitung (3), welche an den Leitungsabschnitt (1) beidseitig angeschlossen ist, so dass das Ventil (2) des Leitungsabschnittes (1) überbrückt wird, wobei die Bypassleitung (3) einen geringeren Durchmesser als der Leitungsabschnitt (1) aufweist, und
- ein in der Bypassleitung (3) angeordnetes Bypassventil (4), umfasst,
bei dem der Fluidstrom in der Bypassleitung (3) mittels einer der Bypassleitung (3) zugeordneten Messvorrichtung (5) überwacht wird, und das Ventil (2) und das Bypassventil (4) mittels einer Steuervorrichtung (6) gesteuert werden,
**dadurch gekennzeichnet, dass**
zwischen einem Überwachungsmodus und einem Betriebsmodus gewählt wird, wobei in dem Überwachungsmodus das Ventil (2) in dem Leitungsabschnitt (1) geschlossen und das Bypassventil (4) geöffnet wird, so dass lediglich die Bypassleitung (3) durchströmt wird, und der Fluidstrom in der Bypassleitung (3) mittels der Messvorrichtung (5) überwacht wird, wobei auch das Bypassventil (4) von der Steuervorrichtung (6) in dem Überwachungsmodus verschlossen wird, wenn von der Messvorrichtung (5) ein unzulässiger Fluidstrom in der Bypassleitung (3) erfasst wird, und wobei in dem Betriebsmodus das Ventil (2) in dem Leitungsabschnitt (1) geöffnet und das Bypassventil (4) geschlossen wird, so dass lediglich der Leitungsabschnitt (1) durchströmt wird.

11. Verfahren nach Anspruch 10, **dadurch gekennzeichnet, dass** ein unzulässiger Fluidstrom erfasst wird, wenn ohne Unterbrechung ein vorgegebenes Fluidvolumen durch die Bypassleitung (3) strömt und/oder über eine vorgegebene Zeitdauer kontinuierlich ein Fluidstrom in der Bypassleitung (3) erfasst wird und/oder eine vorgegebene Flüssigkeitsmenge pro Zeiteinheit überschritten wird.

12. Verfahren nach Anspruch 10 oder 11, **dadurch gekennzeichnet, dass** der Leitungsabschnitt (1) von einem Abschnitt einer Hauptzuleitung des Leitungssystems gebildet wird und als Ventil (2) in dem Leitungsabschnitt (1) das Hauptventil des Leitungssystems verwendet wird und/oder dass auch ein weiteres, vor dem Leitungsabschnitt (1) angeordnetes Ventil (7) des Leitungssystems (1) verschlossen wird, wenn von der Messvorrichtung (5) ein unzulässiger Fluidstrom in der Bypassleitung (3) erfasst wird.

13. Verfahren nach einem der Ansprüche 11 bis 12, **dadurch gekennzeichnet, dass** zu vorgegebenen Zeitpunkten automatisch zwischen dem Betriebsmodus und dem Überwachungsmodus umgeschaltet wird und/oder dass die Ventilstellung des Ventils (2) in dem Leitungsabschnitt (1) und des Bypassventils (4) kontinuierlich überwacht wird.

14. Verfahren nach einem der Ansprüche 10 bis 13, **dadurch gekennzeichnet, dass** ein insbesondere akustisches Signal ausgegeben wird, wenn im Überwachungsmodus von der Messvorrichtung (5) ein unzulässiger Fluidstrom in der Bypassleitung (3) erfasst wird und/oder dass ein Benutzer per SMS und/oder via Internet informiert wird, wenn im Überwachungsmodus von der Messvorrichtung (5) ein unzulässiger Fluidstrom in der Bypassleitung (3) detektiert wird.

15. Verfahren nach einem der Ansprüche 10 bis 14, **dadurch gekennzeichnet, dass** an mehreren Stellen im Leitungssystem der Fluidstrom mittels Messvorrichtungen (5) überwacht wird und/oder dass das Leitungssystem (1) mittels mehrerer Überwachungsabschnitte auf Leckagen überwacht wird.
